# EUROPEAN PATENT SPECIFICATION

(11) **EP 0 945 631 B1**
(45) Date of publication and mention of the grant of the patent: **09.06.2004**
(21) Application number: 99302066.8
(22) Date of filing: 17.03.1999
(51) Int. Cl.: F16B 19/10

(54) **Securing element**
Befestigungsvorrichtung
Dispositif de fixation

(30) Priority: 23.03.1998 JP 7389398
(43) Date of publication of application: 29.09.1999
(73) Proprietor: Newfrey LLC, Newark, Delaware 19711 (US)
(72) Inventor: Kashimura, Shuji c/o Pop Rivets & Fasteners K.K, Toyohasi-shi, Aichi-ken (JP)
(74) Representative: Haar, Lucas H., Dipl.-Ing.

(56) References cited:
- EP-A- 0 077 858
- EP-A- 0 595 041
- FR-A- 2 700 817
- PATENT ABSTRACTS OF JAPAN vol. 1998, no. 04, 31 March 1998 (1998-03-31) -& JP 09 317743 A (POP RIVET FASTENER KK), 9 December 1997 (1997-12-09)

## Description

This invention relates to a blind nut and a securing element capable of effecting securing to a mounting member such as a panel from one direction.

Metal blind nuts are well known comprising a female threaded part, a tubular part continuous with the female threaded part, and a flange formed at the end of the tubular part, such that this tubular part is secured to a mounting member by buckling deformation by this buckle deformation portion and flange, in a condition with the tubular part inserted into a hole of the mounting member, and are disclosed for example in Japanese Utility Model Publication No. Sho. 59-146607. The blind nuts are convenient for securing to members whose back cannot be reached, for example mounting members such as body panels, since the task can be performed from a single direction. The bolt can be screwed into a blind nut secured to the mounting member and, by screwing in this bolt, another member such as an ornamental member can be mounted on the mounting member.

An example of a rivet bolt type securing element is disclosed in Laid-Open Japanese Patent Publication No. Sho. 62-242112. Such a securing element comprises a tubular part, a flange formed at one end of the tubular part, and a mandrel whereof one end projects from the flange and whose other end is fixed to the other end of the tubular part, the construction being such that securing to the mounting member is effected by buckling deformation of the tubular part in a condition with the tubular part inserted into a hole of the mounting member, by means of the buckle deformation portion and the flange, the mandrel being formed with a male thread. The securing element can be secured so as to extend from one direction forwards on the mounting member such as a panel, standing upright on the mounting member after securing in the form of a bolt, so that a member such as an ornamental member can be mounted on the mounting member by screwing a nut thereonto from one direction.

In securing a securing element such as a blind nut, mounting can be effected by tight securing in the case where the mounting member is a hard material such as metal. However, when the mounting member is a soft material such as plastics, there is a risk of damaging the mounting member if the securing element is mounted by a strong tightening force. To deal with this, there are blind nuts which are so designed that securing can be effected even when the mounting member is a soft material such as plastics. An example of such is disclosed in Japanese Utility Model Publication H.3-13607. The tubular part of this blind nut is formed with longitudinal slits or grooves, so that, when securing, buckling can easily be produced thanks to the slit portions; thus, even if the mounting member is of soft material, the blind nut can be reliably secured without damaging the mounting member such as a panel.

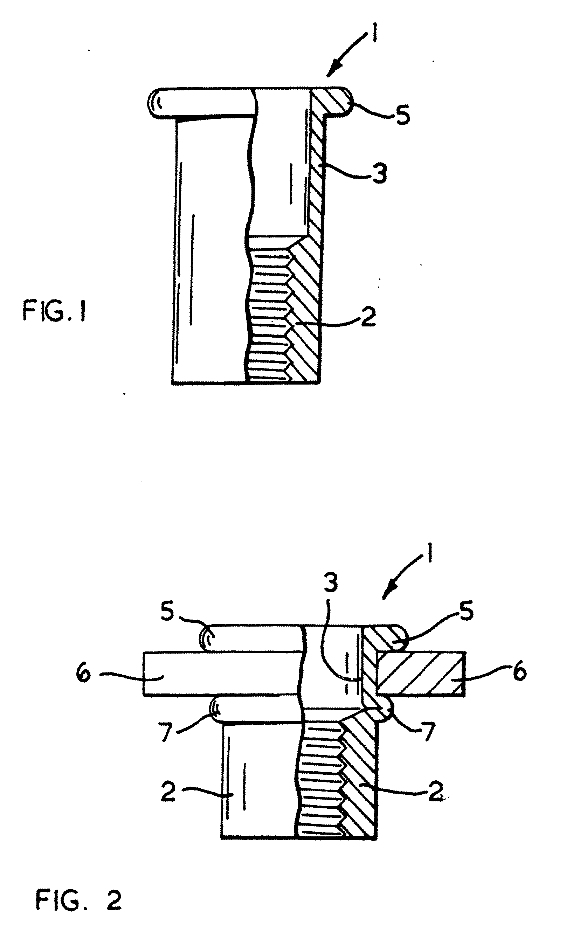

A prior art blind nut is described with reference to Fig. 1 and Fig. 2. Blind nut 1 comprises a female threaded part 2, a tubular part 3 continuous with female threaded part 2, and a flange 5 formed at the end of tubular part 3. As is well known, during the operation of tightening the blind nut 1, tubular part 3 is inserted into a mounting hole of a mounting member 6 such as a panel and female threaded part 2 is pulled upwards by means of a tightening tool or the like, in the condition with flange 5 in face contact with the mounting member. By means of this pulling up, as shown in Fig. 2, tubular part 3 is deformed in the radially outwards direction of the mounting hole so that it projects outwards at bending point 7, undergoing buckling deformation centred on this bending point. If, as in Japanese Utility Model Publication No. H.3-13607, longitudinal slits are formed in tubular part 3, buckling deformation can be achieved by a weak pulling-up force i.e. tightening force, so that, even if the mounting member is of soft material such as plastics, the blind nut can be securely tightened without damaging the mounting member.

However, even regarding blind nuts equipped with slits, some aspects require improvement. For example, if the mounting member is a thermoplastic plastics material (such as for example ABS or PP), this plastics portion turns white when the mounting member is subjected to pressure by the buckling portion. Japanese Patent Publication No. H.9-317743 discloses a blind nut that deals with this problem of whitening. This blind nut comprises a female threaded part, a tubular part continuous with this female threaded part, and a flange formed at the end of this tubular part, the tubular part being formed with slits extending in its longitudinal direction and a groove in the circumferential direction being formed in the circumferential face of the tubular part in the vicinity of the female threaded part. When the female threaded part is pulled up towards the flange, bending of the tubular part commences from the aforesaid circumferential groove portion, so that the bending point is offset from the intermediate position of Fig. 2 of the publication towards the female threaded part; as a result of this offset, the possibility of the buckled portion of the tubular part being pressed against the surface of the mounting member is eliminated and so there is no possibility of whitening of the thermoplastic plastics material being produced. Also, damage to the mounting member can be prevented since, even if the bolt is screwed firmly on to the blind nut, the buckled portion is deformed in such a way as to move away from the surface of the mounting member, so there is no possibility of its being pressed against it.

Thanks to the formation of the circumferential groove in the circumferential face in the vicinity of the female threaded part of the tubular part of the securing element such as a blind nut disclosed in Japanese Patent Application No. H.9-317743 referred to above, the problem of whitening is eliminated in the case where the mounting member is of soft material. If the formation of this circumferential groove could be made unnecessary, the manufacture of a securing element whereby whitening was prevented could be further facilitated.

From EP-A-0 595 041 a blind nut type or rivet bolt type fastening element is known comprising a female threaded or bolt fixing part, a tubular part continuous with this female threaded or bolt fixing part, and a flange formed at the end of this tubular part, constituted such that, in a condition with the tubular part inserted into a hole in a mounting member, securing to the mounting member is effected by buckling deformation of this tubular part, by means of this portion that has been subjected to buckling deformation, and the flange. The tubular part comprises a cylindrical part whose external diameter is formed larger than the external diameter of the female threaded or bolt fixing part and whose external diameter and internal diameter are practically uniform and which is formed with smaller thickness than the female threaded or bolt fixing part, and a reduced-diameter part formed between the cylindrical part and female threaded or bolt fixing part such that the external diameter of this cylindrical part reduces continuously to the external diameter of the female threaded or bolt fixing part.

An object of the present invention is therefore to provide a securing element such as a blind nut or rivet bolt wherein whitening does not occur on securing on to a mounting member made of soft material, without forming a circumferential groove in the circumferential face in the vicinity of the female threaded part of the tubular part.

According to the invention this object is achieved by a blind nut with the features according to claim 1 or a securing element with the features according to claim 5.

With a blind nut according to the invention, when the female threaded part is pulled up towards the flange, the cylindrical part of the tubular part commences bending offset to the reduced-diameter part on the side furthest from the flange that is in contact with the mounting member, and, whilst buckling is taking place in the radially outwards direction from the mounting hole of the mounting member, the bending point of the buckling in the final stage of this securing operation is at a position elevated from (i.e. not contacting) the mounting member, so there is no possibility of the buckled portion at this bending point being pressed against the mounting member, and, consequently, there is no possibility of whitening of a mounting member constituted by soft material occurring. Also, even if the bolt is screwed firmly on to the blind nut, since the portion of the bending point is in a position away from the surface of the mounting member, so that excess tightening force is not applied to the mounting member, damage to a mounting member consisting of soft material can be prevented. In this way, whitening can be avoided and damage to the mounting member can be prevented without the formation of a circumferential groove in the circumferential surface of the vicinity of the female threaded part of the tubular part.

According to this aspect of the invention, preferably knurled grooves may be formed in the face of the cylindrical part of the blind nut where it contacts the mounting member. Also, projections may be formed in the face of the flange or cylindrical part where it contacts the mounting member. By means of such knurled grooves or projections, slippage of the blind nut with respect to the mounting member is stopped and rotation of the blind nut when the bolt is tightened can be prevented. Furthermore, it is desirable to form a slit in the cylindrical part from the flange to the reduced-diameter part. Buckling deformation of the cylindrical part is thereby facilitated.

With the securing element also, by pulling the bolt up using a tightening tool or the like such that it extends beyond the flange, the cylindrical part of the tubular part starts to bend offset to the reduced-diameter part on the side furthest from the flange that contacts the mounting member, so the bending point of buckling is in a position elevated from the mounting member and the buckled portion therefore cannot press against the mounting member. As a result, whitening of a mounting member made of soft material cannot occur and even if the nut is strongly screwed on to the bolt of the securing element after securing, since the portion of the bending point is in a position away from the surface of the mounting member, the tightening force on to the mounting member does not become excessive, so damage to a mounting member made of soft material can be prevented.

It should be noted that in the case of a securing element as described also, knurled grooves may be formed in the surface of the cylindrical part where it is in contact with the mounting member, and projections may be provided in the face of the flange or cylindrical part where it contacts the mounting member. Furthermore, in order to facilitate buckling deformation of the cylindrical part, a slit may be formed in the cylindrical part from the flange to the reduced-diameter part.

Embodiments of the invention will now be described, by way of example only, and with reference to the accompanying drawings, of which:
Figure 1 shows a front view, with half broken away, of a prior art blind nut;
Figure 2 shows a front view, with half broken away, showing how buckling deformation of the blind nut of Fig. 1 occurs;
Figure 3 shows a front view, with half broken away, of a blind nut according to a first embodiment of the invention;
Figure 4 shows a front view, with half broken away, showing how the blind nut of Fig. 3 constituting a first embodiment of the invention is secured to a mounting member;
Figure 5 shows a front view, with half broken away, of a blind nut according to a second embodiment of the invention;
Figure 6 shows a front view, with half broken away, of a rivet bolt-type securing element according to a third embodiment of the invention; and
Figure 7 shows a front view, with half broken away, showing how the securing element of Fig. 6 constituting a third embodiment of the invention is secured to a mounting member.

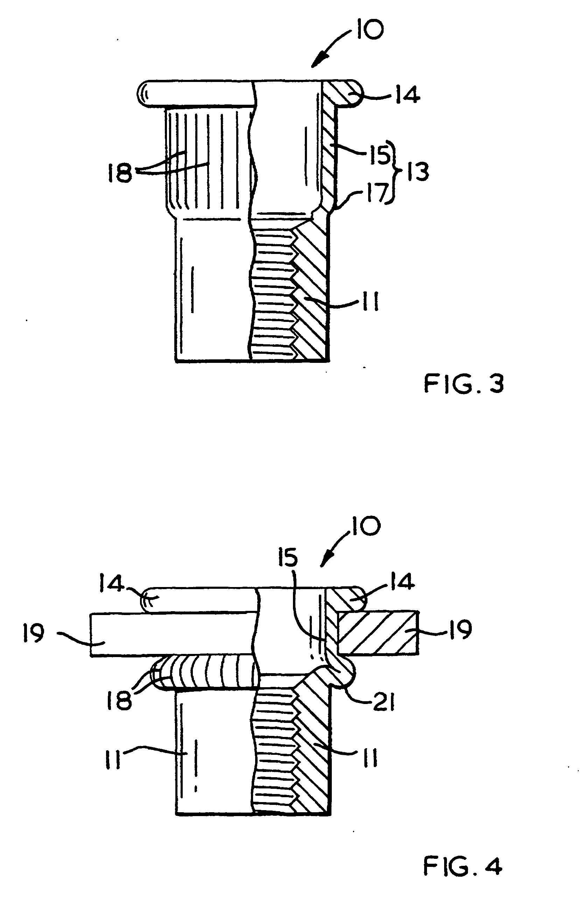

Embodiments of the invention are described below with reference to the drawings. Fig. 3 and Fig. 4 show a blind nut (10) constituting a securing element according to a first embodiment of the invention. In Fig. 3, blind nut (10) is constituted by an integral metal moulding, the whole being formed as a hollow cylindrical body. Blind nut (10) comprises a female threaded part (11), a tubular part (13) thinner than female threaded part (11) and continuing so as to extend upwards from female threaded part (11), and a larger-diameter flange (14) formed at the end of tubular part (13). Tubular part (13) comprises a cylindrical part (15) extending downwards from flange (14) and a reduced-diameter part (17) formed for a short distance between this cylindrical part (15) and female threaded part (11).

Cylindrical part (15) is formed of larger external diameter than female threaded part (11), and is formed thinner than the female threaded part and with practically uniform external and internal diameters. Reduced-diameter part (17) is formed so as to gradually decrease in diameter and such that the outer diameter of cylindrical part (15) is continuous with the outer diameter of female threaded part (11).

The cylindrical part (15) of tubular part (13) is formed thinner than female threaded part (11) and is capable of buckling deformation so as to project radially outwards when, in a condition with this inserted into a hole of a mounting member such as a body panel, and flange (14) making face contact with the mounting member, female threaded part (11) is strongly pulled up towards flange (14) by means of a tightening tool etc. Also, since reduced-diameter part (17) gradually reduces in diameter such that the outer diameter of cylindrical part (15) becomes the outer diameter of the female threaded part (11), it constitutes a starting point for the buckling deformation of cylindrical part (15). Consequently, the cylindrical deformation of cylindrical part (15) commences with deformation offset to the reduced-diameter part (17).

In the embodiment shown in Fig. 3 and Fig. 4, knurled grooves (18) are formed in the circumferential surface of cylindrical part (15). These knurled grooves (18) are effective in ensuring that the bolt screws into the female threaded part (11) by reliably preventing slippage of the blind nut (10) with respect to the mounting member as a result of the rotational force of the bolt when clamping is effected by screwing the bolt into the female threaded part (11) after securing blind nut (10) in the mounting member such as a panel. For the same reason, it is preferable to form slippage-preventing projections on the face of the cylindrical part (15) or flange (14) that contacts the mounting member. Although not shown, these projections may be of various shapes, such as pin shape or projecting rib shape.

Fig. 4 shows the condition of blind nut (10) after tightening. Blind nut (10) is held by screwing female threaded part (11) on to the screw-threaded mandrel of a tightening tool (not shown). Next, flange (14) is pressed on to the outside face of mounting member (19) by inserting female threaded part (11) and tubular part (13) of blind nut (10) held on the screw-threaded mandrel into a mounting hole of mounting member (19) such as a body panel, using the tightening tool. In this condition, female threaded part (11) is pulled up by operating the tightening tool to pull up the screw-threaded mandrel. By means of this pulling up, force is applied to the cylindrical part (15) and reduced-diameter part (17) of tubular part (13), producing deformation such as to cause this portion to project in the radially outwards direction. As mentioned above, the commencement of this deformation is effected from reduced-diameter part (17) on the side furthest from the flange (14). This is believed to be because the deformation stress is initially concentrated in reduced-diameter part (17) where the external diameter of cylindrical part (15) is gradually reduced. Consequently, cylindrical part (15) starts to bend from the reduced-diameter part and subsequently continues to buckle outwards in the radial direction from the mounting hole of mounting member (19), with this buckling deformation offset to reduced-diameter part (17).

By means of flange (14) and the buckled portion of the cylindrical part, blind nut (10) thus clamps mounting member (19) from both sides. By means of this clamping, blind nut (10) is secured on to the mounting member. At the end of this securing process, the root portion of the buckled portion of cylindrical part (15) strongly clamps mounting member (19). However, as shown in Fig. 4, the bending point (21) of the buckled portion of the cylindrical part (15) is in a position separated from (i.e. not contacting) mounting member (19). There is therefore no possibility of the buckled portion at bending point (21) being pressed against the mounting member. Consequently, even when the mounting member is of soft material, there is no possibility of whitening of this soft mounting member occurring. Also, even if the bolt is screwed firmly on to this blind nut (10) after blind nut (10) has been secured to the mounting member, since the portion of bending point (21) is in a position in which it is separated from the back face of mounting member (19), the tightening force on to mounting member (19) does not become excessive and, as a result, even if mounting member (19) is of soft material, damage to the mounting member can be prevented. In this way, whitening can be avoided and damage to the mounting member can be prevented without forming a circumferential groove in the circumferential surface of the tubular part in the vicinity of the female threaded part.

Furthermore, thanks to the formation of knurled grooves (18) in cylindrical part (15) of blind nut (10), the region of these knurled grooves (18) bites into the side wall or the rim surface on the underside of mounting member (19) due to buckling of cylindrical part (15), thereby preventing rotation of blind nut (10) when this is tightened; thus, slippage of blind nut (10) with respect to the mounting member due to the rotational force of the bolt if this is screwed into blind nut (10) after tightening is reliably prevented, enabling the bolt to be reliably screwed into female threaded part (11). The same effect can be obtained by the provision of slippage-preventing projections in the face of cylindrical part (15) or flange (14) that contacts the mounting member. In this way, blind nut (10) shown in Fig. 3 and Fig. 4 is reliably secured on to mounting member (19) and the problem of whitening occurring on tightening is eliminated; furthermore, even if the bolt is screwed into the blind nut after securing, there is little damage to a soft mounting member and slippage on screwing in can also be prevented.

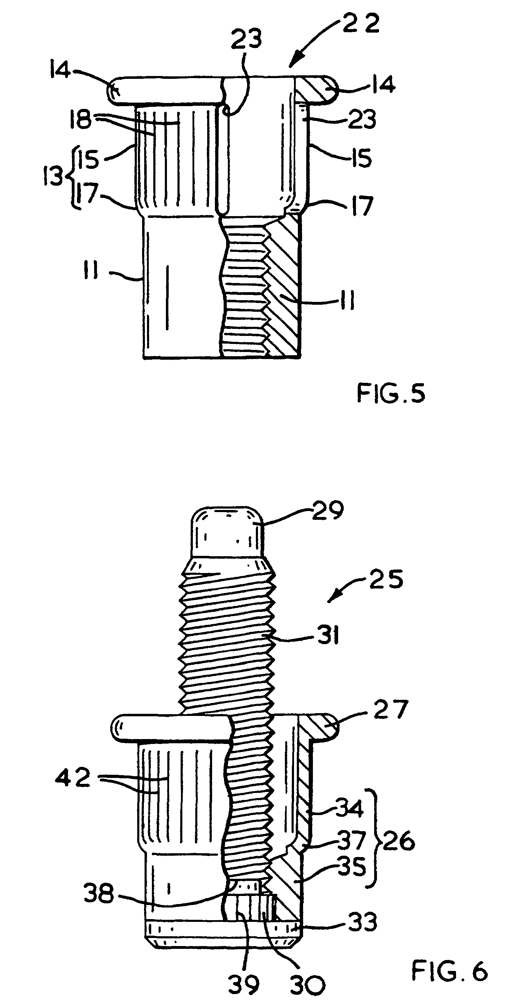

Fig. 5 shows a blind nut (22) according to a second embodiment of the invention. This blind nut (22) is practically identical with blind nut (10) of Fig. 3 and Fig. 4 but is formed with a slit (23) in the cylindrical part. Specifically, as a whole, blind nut (22) consists of an integrally formed hollow metal moulding, comprising a female threaded part (11), a tubular part (13) that is thinner than female threaded part (11) and continues extending upwards from female threaded part (11), and a flange (14) of large diameter formed at the end of tubular part (13). Tubular part (13) comprises a cylindrical part (15) extending below flange (14), and a reduced-diameter part (17) formed for a short distance between this tubular part (15) and female threaded part (11). Reduced-diameter part (17) is formed with gradually reduced diameter such that the outer diameter of cylindrical part (15) is continuous with the outer diameter of female threaded part (11). In order to promote buckling deformation of cylindrical part (15), blind nut (22) is further formed with four slits (23) extending in the longitudinal direction and provided at intervals of 90□ in the circumferential surface direction. The number of these slits (23) is of course not limited to four but could be any desired number. Thus, thanks to the provision of slits (23), buckling deformation of cylindrical part (15) can be performed with a weak upward pulling force i.e. tightening force, facilitating the operation of tightening and reducing further the possibility of damage to a soft mounting member. It should be noted that the shape of blind nut (22) after tightening is the same as that of Fig. 4 apart from the fact that cylindrical part (15) is divided at the locations of slits (23).

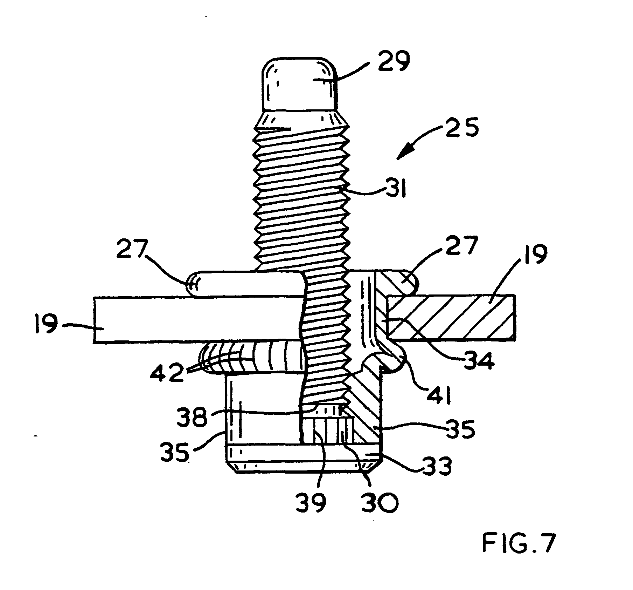

Fig. 6 and Fig. 7 show a rivet bolt type securing element (25) constituting a securing element according to a third embodiment of the invention.

In Fig. 6, securing element (25) comprises a tubular part (26), a flange (27) formed at one end (top end) of tubular part (26), and a bolt (31) that passes through the interior of tubular part (26) and whereof one end (the upper end in the Figure) 29 projects from flange (27) and the other end (the lower end in the Figure) 30 is fixed to the other end (lower end) of tubular part (26). At the other end (30) of bolt (31) there is formed a larger-diameter head (33) of larger diameter than the external diameter of tubular part (26), such that buckling deformation of tubular part (26) is reliably achieved by pulling up bolt (31). Tubular part (26) comprises a cylindrical part (34) arranged adjacent flange (27), which constitutes the main buckle deformation portion, a bolt fixing part (35) fixed to the other end (lower end) (30) of bolt (31), and a reduced-diameter part (37) formed between cylindrical part (34) and bolt fixing part (35).

Cylindrical part (34) is formed of cylindrical shape surrounding bolt (31), being formed with external diameter larger than the external diameter of bolt fixing part (35) and being formed with small thickness so as to be capable of buckling deformation. Reduced-diameter part (37) is formed such that the outer diameter of larger-diameter cylindrical part (34) is continuous with and reduces to the external diameter of bolt fixing part (35), which is of smaller diameter, and is formed thinner than bolt fixing part (35). Bolt fixing part (35) is fixed to the other end (30) of bolt (31) by welding or caulking etc. Preferably a circumferential groove (38) and/or knurled groove (39) are formed at the other end (30) of the bolt in order that bolt (31) should not become detached from tubular part (26) and should be fixed so that it cannot rotate. Bolt (31) is formed with a male thread from a position corresponding to tubular part (26) as far as a position extended by a certain length beyond flange (27). The one end i.e. the upper portion (29) of bolt (31), in the example illustrated, was formed with short length. In the case of the example illustrated, buckling deformation of cylindrical part (34) of tubular part (26) is effected by pulling up bolt (3 1) by threading on to the male screwthread a nut member provided at the nose of a tightening tool and then rotating this. Portion (29) above the male thread of bolt (31) could be formed longer and with a small-diameter "broken-neck" part as shown in Laid-Open Patent Publication Sho. 62-242112. In this case, buckling deformation of cylindrical part (34) of tubular part (26) is effected by operation such as to engage a gripper of a tightening tool with the upper end portion (29) of the bolt and pulling up the gripper until the bolt is broken off at the small-diameter broken-neck part (not shown).

The condition after tightening securing element (25) is shown in Fig. 7. Securing element (5 )is held by threading a nut member of a tightening tool (not shown) on to the male thread of bolt (31) and, using the tightening tool, the tubular part (26) of securing element (25) is inserted into a mounting hole of mounting member (19), flange (27) being pressed against the outer surface of mounting member (19). In this condition, force such as to produce deformation such as to cause this portion to project in the radially outwards direction is applied to cylindrical part (34) and reduced-diameter part (37) of tubular part (26) by pulling up bolt (31) by rotating the nut member, by operating the tightening tool. Commencement of this deformation is effected from the reduced-diameter part (37) furthest from flange (27), just as in the case of blind nut (10). Bending of cylindrical part (3)4 therefore commences from reduced-diameter part (37) and subsequently buckling deformation continues in the radially outwards direction from the mounting hole of mounting member (19), offset towards reduced-diameter part (37).

Securing element (25) is secured to the mounting member by clamping mounting member (19) from both sides by means of flange (27) and the buckled portion of cylindrical part (34). As shown in Fig. 7, the bending point (41) of the buckled portion of cylindrical part (34) is in a position elevated from (i.e. not contacting) mounting member (19), so there is no possibility of the buckled portion pressing against the mounting member at bending point (41). Consequently, when the mounting member is made of soft material, whitening of this soft mounting member cannot occur. Also, even if the nut is strongly screwed on to securing element (25) after securing element (25) has been secured to the mounting member, since the portion of the bending point (41) is in a position away from the back face of mounting member (19), the tightening force on to mounting member (19) does not become excessively strong and as a result even if the mounting member (19) is made of soft material, damage to the mounting member can be prevented. In this way, whitening can be avoided and damage to the mounting member can be prevented without forming a circumferential groove in the circumferential surface in the vicinity of the female threaded part of the tubular part.

It should be noted that, since knurled grooves (42) are formed in cylindrical part (34) also in the case of securing element (25), the portion of these knurled grooves (42) bites into the side wall or under-surface rim face of the mounting hole of the mounting member (19) on buckling of the cylindrical part (34), thereby preventing rotation of securing element (25) within the mounting hole and enabling slippage of securing element (25) with respect to the mounting member due to rotational force of the nut when this is screwed on to securing element (25) after tightening to be reliably prevented; thus the nut can be threaded on to bolt (31) in a secure fashion. It is also desirable to form slippage-preventing projections on the surface of cylindrical part (34) or flange (27) where this contacts the mounting member. Buckling deformation may be further facilitated by forming slits in the cylindrical part (34) from flange (27) as far as the reduced-diameter part (37).

With a blind nut according to the invention, since a reduced-diameter part is provided that effects connection whilst reducing in diameter between the female threaded part and the cylindrical part of larger diameter than the female threaded part, bending commences offset towards the reduced diameter part, and, whilst buckling takes place in the radially outwards direction from the mounting hole of the mounting member, the bending point of the buckling in the last stage of tightening is in a position elevated from (i.e. not contacting) the mounting member, so there is no possibility of the buckled portion at this bending point being pressed against the mounting member and as a result there is no possibility of whitening of a mounting member made of soft material occurring. Also, even if the bolt is screwed strongly on to the blind nut, since the tightening force applied to the mounting member cannot become excessively large because the portion of the bending point is in a position away from the surface of the mounting member, damage to a mounting member made of soft material can be prevented. In this way, whitening can be avoided and damage to the mounting member can also be prevented without forming a circumferential groove in the circumferential surface in the vicinity of the female threaded part of the tubular part.

Since, with a rivet bolt type securing element according to the invention, the tubular part is provided with a reduced-diameter part that reduces in diameter such that the outer diameter of the cylindrical part is continuous with the outer diameter of the bolt fixing part between the cylindrical part which is formed of small thickness so as to permit buckling deformation and the bolt fixing part where the bolt is fixed, when the bolt is pulled upwards using the tightening tool or the like so as to cause it to extend beyond the flange, bending of the cylindrical part commences offset towards the reduced-diameter part; thus, the bending point of buckling is in a position elevated from the mounting member, so there is no possibility of the buckling portion being pressed against the mounting member; consequently, whitening of a mounting member made of soft material cannot occur and even if the nut is screwed firmly on to the bolt of the securing element after securing, damage to a mounting member of soft material can be prevented.

## Claims

1. A blind nut comprising a female threaded part (11), a tubular part (13) continuous with the female threaded part (11), and a flange (14) formed at the end of this tubular part (13), constituted such that, in a condition with the tubular part (13) inserted into a hole in a mounting member (19), securing to the mounting member (19) is effected by buckling deformation of the tubular part (13), by means of this portion that has been subjected to buckling deformation, and the flange (14), wherein:
the tubular part (13) comprises a cylindrical part (15) whose external diameter is formed larger than the external diameter of the female threaded part (11) and whose external diameter and internal diameter are practically uniform and which is formed with smaller thickness than the female threaded part, and a reduced-diameter part (17) formed between the cylindrical part (15) and female threaded part (11) such that the external diameter of this cylindrical part (15) reduces continuously to the external diameter of the female threaded part (11),
**characterised in that** the reduced-diameter part (17) is shaped in such a way that when an axial force is applied to the cylindrical part (15) by pulling up the threaded part (11) against the cylindrical part (15) the deformation stress is initially concentrated in reduced-diameter part (17) where the external diameter of cylindrical part (15) is gradually reduced and that the cylindrical part (15) starts to bend from the reduced-diameter part and subsequently continues to buckle outwards in the radial direction from the mounting hole of mounting member (19), with this buckling deformation offset to reduced-diameter part (17).

2. A blind nut according to claim 1 wherein knurled grooves (11) are formed on the face of the cylindrical part where it contacts the mounting member (19).

3. A blind nut according to claim 1 or claim 2 wherein projections are formed in the surface of the cylindrical part (15) or the flange (14) where it contacts the mounting member (19).

4. A blind nut according to any of claims 1 - 3 wherein a slit is formed in the cylindrical part (15) from the flange to the reduced-diameter part (17).

5. A securing element comprising a tubular part (26), a flange (27) formed at one end of this tubular part, and a bolt (31) passing through the interior of the tubular part and whereof one end (29) projects from the flange (27) while its other end (30) is fixed to the other end of the tubular part, constituted such that, in a condition with the tubular part inserted into a hole of the mounting member, by buckling deformation of the tubular part, securing on to the mounting member is effected by means of this portion that has been subjected to buckling deformation and the flange; wherein:
the tubular part comprises a cylindrical part (34) where buckling deformation takes place and a bolt fixing part (35) fixed to the other end of the bolt, the cylindrical part being formed of larger diameter than the external diameter of the bolt fixing part and of smaller thickness, and a reduced-diameter part (37) being provided formed such that the external diameter of the cylindrical part reduces continuously to the external diameter of the bolt fixing part, between the bolt fixing part and the cylindrical part,
**characterised in that** the reduced-diameter part (37) is shaped in such a way that when an axial force is applied to the cylindrical part (34) by pulling up the bolt fixing part (35) against the cylindrical part (34) the deformation stress is initially concentrated in reduced-diameter part (37) where the external diameter of cylindrical part (34) is gradually reduced and that the cylindrical part (34) commences to bend from the reduced-diameter part and subsequently continues to buckle outwards in the radial direction from the mounting hole of mounting member (19), with this buckling deformation offset to reduced-diameter part (17)..

6. A securing element according to claim 5 wherein knurled grooves (42) are formed on the face of the cylindrical part where it contacts the mounting member.

7. A securing element according to claim 5 or claim 6 wherein projections are formed on a face of the flange or the cylindrical part where it contacts the mounting member.

8. A securing element according to any one of claims 5 - 7 wherein a slit is formed in the cylindrical part from the flange to the reduced-diameter part.

## Patentansprüche

1. Blindnietmutter mit einem Innengewindeteil (11), einem sich an den Innengewindeteil (11) anschließenden rohrförmigen Teil (13) und einem an dem Ende des rohrförmigen Teils (13) ausgebildeten Flansch (14), die so ausgebildet ist, dass in eingesetztem Zustand des rohrförmigen Teils (13) in eine in einem Bauteil (19) vorgesehene Bohrung die Befestigung an dem Bauteil (19) durch Stauchverformung des rohrförmigen Teils (13) erfolgt, mittels des der stauchenden Verformung ausgesetzten Abschnitts und des Flansches (14), wobei:
der rohrförmige Teil (13) einen zylindrischen Abschnitt (15) aufweist, dessen Außendurchmesser größer als der Außendurchmesser des Innengewindeteils (11) ist und dessen Außen- und Innendurchmesser praktisch gleich sind, und der von geringere Dicke als der Innengewindeteil ist, sowie einen Abschnitt (17) verringerten Durchmessers, der zwischen dem zylindrischen Abschnitt (15) und dem Innengewindeteil (11) so ausgebildet ist, dass der Außendurchmesser des zylindrischen Abschnitts (15) sich stetig auf den Außendurchmesser des Innengewindeteils (11) verjüngt,
**dadurch gekennzeichnet, dass** der Abschnitt verringerten Durchmessers (17) so geformt ist, dass bei Beaufschlagung des zylindrischen Abschnitts (15) mit einer Axialkraft, die durch Hochziehen des Gewindeteils (11) gegen den zylindrischen Abschnitt (15) ausgeübt wird, die Verformungsbeanspruchung sich zunächst in dem Abschnitt (17) verringerten Durchmessers konzentriert, wo der Außendurchmesser des zylindrischen Abschnitts (15) allmählich abnimmt, und dass der zylindrische Abschnitt (15) von dem Abschnitt verringerten Durchmessers ausgehend mit der Biegeverformung beginnt und danach von der Befestigungsbohrung des Bauteils (19) aus radial nach außen gestaucht wird, wobei diese Stauchverformung versetzt zu dem Abschnitt (17) verringerten Durchmessers erfolgt.

2. Blindnietmutter nach Anspruch 1, wobei auf der mit dem Bauteil (19) in Kontakt stehenden Außenseite des zylindrischen Abschnitts Rändelnuten (11) ausgebildet sind.

3. Blindnietmutter nach Anspruch 1 oder 2, wobei in der mit dem Bauteil (19) in Kontakt stehenden Außenseite des zylindrischen Abschnitts (15) oder des Flansches (14) Vorsprünge ausgebildet sind.

4. Blindnietmutter nach einem der Ansprüche 1 bis 3, wobei in dem zylindrischen Abschnitt (15) ein Schlitz vorgesehen ist, der sich von dem Flansch bis zu dem Abschnitt (17) verringerten Durchmessers erstreckt.

5. Sicherungselement mit einem rohrförmigen Teil (26), einem an einem Ende des rohrförmigen Teils ausgebildeten Flansch (27) und einem das Innere des rohrförmigen Teils durchdringenden Bolzen (31), der mit einem Ende (29) aus dem Flansch (27) herausragt und mit seinem anderen Ende (30) an dem anderen Ende des rohrförmigen Teils befestigt ist, dergestalt, dass in eingesetztem Zustand des rohrförmigen Teils in eine Bohrung des Bauteils die Befestigung an dem Bauteil durch Stauchverformung des rohrförmigen Teils erfolgt, mittels des der stauchenden Verformung ausgesetzten Abschnitts und des Flansches, wobei:
der rohrförmige Teil einen zylindrischen Abschnitt (34) umfasst, an dem die Stauchverformung stattfindet, und einen an dem anderen Ende des Bolzens befestigten Bolzenbefestigungsabschnitt (35), wobei der zylindrische Abschnitt einen größeren Durchmesser als der Außendurchmesser des Bolzenbefestigungsabschnitts und eine geringere Dicke aufweist, und zwischen dem Bolzenbefestigungsabschnitt und dem zylindrischen Abschnitt ein Abschnitt (37) verringerten Durchmessers vorgesehen ist, der so ausgebildet ist, dass der Außendurchmesser des zylindrischen Abschnitts sich stetig auf den Außendurchmesser des Bolzenbefestigungsabschnitts verjüngt,
**dadurch gekennzeichnet, dass** der Abschnitt (37) verringerten Durchmessers so geformt ist, dass bei Beaufschlagung des zylindrischen Abschnitts (34) mit einer Axialkraft, die durch Hochziehen des Bolzenbefestigungsabschnitts (35) gegen den zylindrischen Abschnitt (34) ausgeübt wird, die Verformungsbeanspruchung sich zunächst in dem Abschnitt (37) verringerten Durchmessers konzentriert, wo der Außendurchmesser des zylindrischen Abschnitts (34) allmählich abnimmt, und dass der zylindrische Abschnitt (34) von dem Abschnitt verringerten Durchmessers ausgehend mit der Biegeverformung beginnt und danach von der Befestigungsbohrung des Bauteils (19) aus radial nach außen gestaucht wird, wobei diese Stauchverformung versetzt zu dem Abschnitt (17) verringerten Durchmessers erfolgt.

6. Sicherungselement nach Anspruch 5, wobei auf der mit dem Bauteil in Kontakt stehenden Außenseite des zylindrischen Abschnitts Rändelnuten (42) ausgebildet sind.

7. Sicherungselement nach Anspruch 5 oder 6, wobei auf einer mit dem Bauteil in Kontakt stehenden Außenseite des Flansches oder des zylindrischen Abschnitts Vorsprünge ausgebildet sind.

8. Sicherungselement nach einem der Ansprüche 5 bis 7, wobei in dem zylindrischen Abschnitt ein Schlitz vorgesehen ist, der sich von dem Flansch bis zu dem Abschnitt verringerten Durchmessers erstreckt.

## Revendications

1. Ecrou borgne comprenant une partie filetée femelle (11), une partie tubulaire (13) continue avec la partie filetée femelle (11), et un collet (14) formé au niveau de l'extrémité de cette partie tubulaire (13), constituée de telle façon que, dans un état où la partie tubulaire (13) est insérée dans un trou prévu dans un élément de montage (19), la fixation sûre sur l'élément de montage (19) est effectuée grâce à une déformation par gauchissement de la partie tubulaire (13), au moyen de cette portion qui a été soumise à une déformation par gauchissement, et du collet (14), dans lequel :
la partie tubulaire (13) comprend une partie cylindrique (15) dont le diamètre extérieur est formé pour qu'il soit supérieur au diamètre extérieur de la partie filetée femelle (11), et dont le diamètre extérieur et le diamètre intérieur sont pratiquement uniformes et qui est formé avec une épaisseur inférieure à celle de la partie filetée femelle (11), et une partie à diamètre réduit (17) formée entre la partie cylindrique (15) et la partie filetée femelle (11), de telle sorte que le diamètre extérieur de cette partie cylindrique (15) se réduit, en continu, pour atteindre le diamètre extérieur de la partie filetée femelle (11),
**caractérisé en ce que** la partie à diamètre réduit (17) est formée de telle manière que, lorsqu'une force axiale est appliquée sur la partie cylindrique (15) en relevant la partie filetée (11), en contre à la partie cylindrique (15), la contrainte de la déformation est initialement concentrée dans la partie à diamètre réduit (17), où le diamètre extérieur de la partie cylindrique (15) est réduit progressivement et **en ce que** la partie cylindrique (15) commence à fléchir à partir de la partie à diamètre réduit et ensuite continue à gauchir vers l'extérieur, dans la direction radiale, à partir du trou de montage de l'élément de montage (19), cette déformation par gauchissement étant décalée vers la partie à diamètre réduit (17).

2. Ecrou borgne selon la revendication 1, dans lequel des rainures moletées (11) sont formées sur la face de la partie cylindrique où elle est en contact avec l'élément de montage (19).

3. Ecrou borgne selon la revendication 1 ou la revendication 2, dans lequel des saillies sont formées sur la surface de la partie cylindrique (15) ou sur le collet (14), à l'endroit où elle/il est en contact avec l'élément de montage (19).

4. Ecrou borgne selon l'une quelconque des revendications 1 à 3, dans lequel une fente est formée dans la partie cylindrique (15) entre la partie cylindrique (15) et la partie à diamètre réduit (17).

5. Elément de fixation sûre comprenant une partie tubulaire (26), un collet (27) formé au niveau d'une extrémité de cette partie tubulaire, et un boulon (31) traversant l'intérieur de la partie tubulaire et dont une extrémité (29) fait saillie à partir du collet (27 alors que son autre extrémité (30) est fixée sur l'autre extrémité de la partie tubulaire, constitué de telle façon que, dans un état dans lequel la partie tubulaire est insérée dans un trou de l'élément de montage, grâce à une déformation par gauchissement de la partie tubulaire, la fixation sûre sur l'élément de montage est réalisée au moyen de cette portion qui a été soumise à une déformation par gauchissement et du collet ; dans lequel :
la partie tubulaire comprend une partie cylindrique (34) où la déformation par gauchissement se produit et une partie de fixation du boulon (35) fixée sur l'autre extrémité du boulon, la partie cylindrique étant formée avec un diamètre plus grand que le diamètre extérieur de la partie de fixation du boulon et avec une épaisseur inférieure, et une partie à diamètre réduit (37) étant fournie en étant formée de telle façon que le diamètre extérieur de la partie cylindrique se réduit en continu pour atteindre le diamètre extérieur de la partie de fixation du boulon, entre la partie de fixation du boulon et la partie cylindrique,
**caractérisé en ce que** la partie à diamètre réduit (37) est formée de telle manière que, lorsqu'une force axiale est appliquée sur la partie cylindrique (34) en tirant vers le haut la partie de fixation du boulon (35), en s'opposant à la partie cylindrique (34), la contrainte de la déformation est initialement concentrée dans la partie à diamètre réduit (37), à l'endroit où le diamètre extérieur de la partie cylindrique (34) est réduit progressivement et **en ce que** la partie cylindrique (34) commence à fléchir à partir de la partie à diamètre réduit et ensuite continue à gauchir vers l'extérieur, dans la direction radiale, à partir du trou de montage de l'élément de montage (19), cette déformation par gauchissement étant décalée vers la partie à diamètre réduit (17).

6. Elément de fixation sûre selon la revendication 5, dans lequel des rainures moletées (42) sont formées sur la face de la partie cylindrique, où elle est en contact avec l'élément de montage.

7. Elément de fixation sûre selon la revendication 5 ou la revendication 6, dans lequel des saillies sont formées sur une face du collet ou de la partie cylindrique, où il/elle est en contact avec l'élément de montage.

8. Elément de fixation sûre selon l'une quelconque des revendications 5 à 7, dans lequel une fente est formée dans la partie cylindrique entre la partie cylindrique et la partie à diamètre réduit.
